# EUROPEAN PATENT SPECIFICATION

(11) **EP 3 471 960 B1**
(45) Date of publication and mention of the grant of the patent: **15.04.2020**
(21) Application number: 17739694.2
(22) Date of filing: 06.06.2017
(51) Int. Cl.: B32B 27/36, B32B 27/18, B32B 27/06, B32B 27/08, B32B 27/20, B32B 27/28, B32B 27/30, B32B 27/40, C08K 3/22, C08K 5/13, C08K 5/16

(54) **MULTILAYER STRUCTURES AND METHODS OF FORMING THE SAME**
MEHRSCHICHTIGE STRUKTUREN UND VERFAHREN ZUR FORMUNG DAVON
STRUCTURES MULTICOUCHES ET LEURS PROCÉDÉS DE FORMATION

(30) Priority: 15.06.2016 US 201662350342 P
(43) Date of publication of application: 24.04.2019
(73) Proprietor: SABIC Global Technologies B.V., 4612 PX Bergen op Zoom (NL)
(72) Inventor: ZHENG, Liping, Shanghai 201319 (CN); LAI, Hengjie, Shanghai 201319 (CN); ZHANG, Shen, Shanghai 201319 (CN)
(74) Representative: Balder IP Law, S.L.
(86) International application number: PCT/IB2017/053332
(87) International publication number: WO 2017/216680

(56) References cited:
- JP-A- 2010 099 979
- US-A1- 2007 256 782
- US-A1- 2012 019 906
- US-A1- 2016 002 097

## Description

### TECHNICAL FIELD

This disclosure relates to an infrared blocking composition, methods of forming, and the infrared layer formed therefrom.

### BACKGROUND

Plastic glazings offer many advantages as compared to conventional glass glazings. These advantages include, for example, increased fracture resistance, a reduced weight, and for use in vehicles, an increased occupant safety in the event of traffic accidents, and a lower fuel consumption. Unfortunately though, plastic glazings experience an increased permeability to infrared radiation as compared to glass glazings, which ultimately results in an increased heating of interior spaces such as those of buildings and vehicles. The increased temperature in the interior space reduces the comfort for the occupants or inhabitants and may entail increased demands on the air conditioning, which in turn increases the energy consumption. U.S. Application 2016/002097 discloses a pane arrangement with coating comprising at least a transparent substrate, a primer on at least one subregion of the substrate, said primer containing at least one first UV absorber as well as at least two IR absorbers in the form of dispersed nanoparticles, and a scratchproof coat on the surface of the primer, said scratchproof coat containing at least one second UV absorber, wherein the first IR absorber is a hexaboride of the general formula XB₆ and X=Y, Sr, La, Ce, Pr, Nd, Sm, Eu, Gd, Tb, Dy, Ho, Er, Tm, Yb, or Lu, and the second IR absorber is indium tin oxide or antimony tin oxide. JP 2010/099979 discloses a functional film containing at least a heat ray shielding layer characterized in that the heat ray shielding layer contains the tungsten compound as a heat ray shielding agent and the heat ray shielding layer or other layers, contain ultraviolet absorbing agents having maximum absorbing wavelengths within a range from 315 to 420 nm and an ultraviolet absorbing agent b having the maximum absorbing wavelength within a range not higher than 310 nm.

Thus, there is a need for new technologies, for example, with passive design solutions, which would lead to a reduced solar heat load of interior spaces.

### BRIEF SUMMARY

The invention is disclosed in the appended claims.

Disclosed herein is an infrared blocking composition, a method of forming, and an infrared layer formed therefrom.

In an embodiment, a multilayer structure comprises a multiwall polycarbonate substrate having a first surface; and a blocking layer comprising an ultraviolet blocking layer located on the first surface; wherein the ultraviolet blocking layer optionally comprises zirconium oxide and an ultraviolet layer polymer matrix.

In another embodiment, a multilayer structure comprises a multiwall polycarbonate substrate having a first surface; and a protective layer comprising an infrared blocking layer located on the first surface; wherein the infrared blocking layer comprises 50 to 98 weight percent (wt%) of an infrared layer polymer matrix based on a total weight of the infrared blocking layer; and 2 to 50 wt% of an infrared blocking agent based on the total weight of the infrared blocking layer; wherein the infrared blocking agent comprises tungsten oxide.

In an embodiment, an article comprises the multilayer structure.

In an embodiment, a method of forming the multilayer structure comprises laminating or coextruding the protective layer and the multiwall polycarbonate substrate to form the multilayer structure.

In another embodiment, a method of forming the multilayer structure comprises coating a curable composition on the multiwall polycarbonate substrate; and curing the protective layer.

In yet another embodiment, a method of forming the multilayer structure comprises co-extruding the infrared blocking layer and the multiwall polycarbonate substrate; and coating the ultraviolet blocking layer on the infrared blocking layer.

The above described and other features are exemplified by the following figures and detailed description.

### BRIEF DESCRIPTION OF THE DRAWINGS

Refer now to the figures, which are exemplary embodiments, and wherein the like elements are numbered alike.
FIG. 1 is an illustrative example of an embodiment of the multilayer structure;
FIG. 2 is an illustrative example of an embodiment of the multilayer structure;
FIG. 3 is an illustrative example of an embodiment of the multilayer structure;
FIG. 4 and FIG. 5 are graphical illustrations of the spectra of Examples 1 and 2, respectively;
FIG. 6 is a graphical illustrations of the spectra of Example 10; and
FIG. 7, FIG. 8, and FIG. 9 are graphical illustrations of the spectra of Examples 11-13, respectively.

### DETAILED DESCRIPTION

The greatest part of solar energy is apportioned to both the visible and near infrared wavelengths of 300 to 2,500 nanometers (nm). Solar radiation that penetrates a plastic glazing and enters an internal space can be emitted as long-wave thermal radiation having a wavelength of 5 to 15 micrometers. While plastic glazings are transparent to the visible and near infrared wavelengths, they are not transparent to the long-wave thermal radiation and the thermal radiation cannot radiate outwards of the internal space, resulting in a greenhouse effect on the internal space. In order to reduce the heat buildup in internal spaces, the amount of solar energy that penetrates the plastic glazing should be minimized. It was surprisingly discovered that one or both of an ultraviolet blocking layer comprising zirconium oxide and an infrared blocking layer comprising an infrared blocking agent could result in a decrease in solar transmission through a plastic glazing. The infrared blocking layer can block much of the light in the infrared wavelength, but is able to maintain a high visible light transmission at the same time. The ultraviolet blocking layer can block much of the light in the ultraviolet wavelength, but is able to maintain a high visible light transmission at the same time.

The infrared blocking layer comprises an infrared blocking agent and an infrared layer polymer matrix. The infrared blocking comprises tungsten oxide and can comprise indium tin oxide, antimony tin oxide, fluorine tin oxide, or a combination comprising at least one of the foregoing.

The infrared blocking agent comprises a tungsten oxide. The tungsten oxide can have the formula W_{y}O_{z}, wherein z/y can be 2.20 to 2.99. The tungsten oxide can have the formula MₓW_{y}O_{z}, wherein x/y can be 0.001 to 1.000 (for example, 0.001 to 1.000), z/y can be 2.2 to 3.0, and wherein M can comprise H, He, an alkali metal, an alkaline-earth metal, a rare earth metal, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, or a combination comprising at least one of the foregoing. Specifically, M can comprise H, Cs, Rb, K, Tl, In, Ba, Li, Ca, Sr, Fe, Sn, or a combination comprising at least one of the foregoing. More specifically, M can comprise Cs. The tungsten oxide can comprise potassium tungsten oxide (such as K(WO₃)₃), rubidium tungsten oxide (such as Rb(WO₃)₃), cesium tungsten oxide (such as Cs(WO₃)₃), thallium tungsten oxide (such as T1(WO₃)₃), or a combination comprising one or more of the foregoing. The tungsten oxide can comprise cesium tungsten oxide (CTO). A ratio of cesium to tungsten can be 0.20 to 0.33.

The infrared blocking agent can comprise one or both of regular shaped particles and irregular shaped particles. The infrared blocking agent can comprise particles that are spherical, irregular, flakes, whiskers, cylinders, and the like, or a combination comprising at least one of the foregoing. The infrared blocking agent can comprise particles that have an average largest dimension of less than or equal to 200 nm, less than or equal to 75 nm, or 5 to 100 nm. 90 to 100 wt%, or greater than or equal to 95 wt%, or greater than or equal to 99 wt% of the infrared blocking agent particles can have an average largest dimension of less than or equal to 200 nm.

The infrared blocking layer can comprise 2 to 50 wt%, or 2 to 40 wt%, or 5 to 35 wt%, or 12 to 30 wt%, or 15 to 28 wt% of the infrared blocking agent based on the total weight of the layer.

The infrared layer polymer matrix can comprise a polyurethane, a polyacrylate, or a combination comprising at least one of the foregoing. The infrared layer polymer matrix can comprise the silicon-based acrylate, for example, comprising a polysiloxane such as polydimethylsiloxane. The infrared layer polymer matrix can be a UV cured polymer matrix. The infrared blocking layer can comprise 50 to 98 wt%, or 60 to 98 wt% of an infrared layer polymer matrix based on a total weight of the infrared blocking layer.

The infrared blocking layer can have a thickness of 1 to 100 micrometers, or 35 to 75 micrometers, or 1 to 10 micrometers, or less than or equal to 10 micrometers. The infrared blocking layer can have a thickness of 1 micrometer to 1 millimeter (mm), or 35 micrometers to 0.5 mm. The infrared blocking layer can have a thickness of 30 to 100 micrometers, for example, if prepared by a coextrusion method. The infrared blocking layer can have a thickness of 5 to 10 micrometers, for example, if prepared by a coating method.

The infrared blocking layer can have a 5B adhesion, for example, if prepared by a coating method. The adhesion can be determined in accordance with ASTM D3002-07, where 5B is the rating for the best adhesion down to 0B that is the lowest adhesion rating. When the infrared blocking layer is prepared by a coextrusion method, the infrared blocking layer can exhibit no delamination.

The infrared blocking layer can have a visible light transmission (Tvis) capable of transmitting 20 to 85%, or 35 to 55% of the visible light as determined in accordance with ISO-9050.

The infrared blocking layer can have a total solar transmission (Tts) of greater than or equal to 50%, or greater than or equal to 70%, or greater than or equal to 75%, or 50 to 95% as determined in accordance with ISO-9050. The infrared blocking layer can have a total solar transmission of less than or equal to 75%, or less than or equal to 70%, or less than or equal to 50%, or 40 to 60%, or 20 to 50% as determined in accordance with ISO-9050.

The infrared blocking layer can have a haze of less than or equal to 8%, or less than or equal to 5%, or less than or equal to 3%, or less than or equal to 1%, or 0.01 to 5% as determined in accordance with ASTM D-1003-00, Procedure A, measured, e.g., using a HAZE-GUARD DUAL from BYK-Gardner, using an integrating sphere (0°/diffuse geometry), wherein the spectral sensitivity conforms to the CIE standard spectral value under standard lamp D65.

The infrared blocking layer can have an infrared blocking of greater than or equal to 80%, or greater than or equal to 90%, or 90 to 99%. The IR blocking is equal to (the total IR transmittance (0.42456) minus the sum of the transmittance over the wavelengths of 780 to 2,500 nm) divided by the total IR transmittance times 100. It is noted that the value of 0.42456 is the infrared portion from overall solar spectrum energy based on a normalized relative spectra distribution of global solar radiation (direct + diffuse) for an air mass of 1.5.

The ultraviolet blocking layer comprises an ultraviolet layer polymer matrix. The ultraviolet layer polymer matrix can comprise polyvinylidene fluoride, polyvinylfluoride, polypropylene, polyethylene, polyacrylate (such as polymethacrylate and polymethylmethacrylate), a polysiloxane, a polyurethane, an acrylic polymer, a polycarbonate, a polyester, an epoxy, or a combination comprising at least one of the foregoing. The ultraviolet layer polymer matrix can comprise polymethylmethacrylate.

The ultraviolet blocking layer comprises zirconium oxide.

The ultraviolet blocking layer can comprise 20 to 80 wt%, or 30 to 70 wt%, or 40 to 60 wt% of zirconium oxide based on a total weight of the ultraviolet blocking layer.

The ultraviolet blocking layer can have a thickness of 1 to 100 micrometers, or 35 to 75 micrometers, or 1 to 10 micrometers, or less than or equal to 10 micrometers.

The zirconium oxide can comprise one or both of regular shaped particles and irregular shaped particles. The zirconium oxide can comprise particles that are spherical, irregular, flakes, whiskers, cylinders, and the like, or a combination comprising at least one of the foregoing. The zirconium oxide can comprise particles that have an average largest dimension of less than or equal to 5 micrometers (for example, 0.01 to 5 micrometers), less than or equal to 200 nm, or 400 to 600 nm, or 50 to 100 nm. 90 to 100 wt%, or greater than or equal to 95 wt%, or greater than or equal to 99 wt% of the zirconium oxide particles can have an average largest dimension of less than or equal to 5 micrometers.

The ultraviolet blocking layer can comprise one homogenous layer or can comprise multiple sub-layers, such as a primer layer and a topcoat layer. The primer layer can aid in adhering the topcoat to the multilayer structure. The primer layer, for example, can comprise an acrylic, a polyester, an epoxy, or a combination comprising at least one of the foregoing. The topcoat layer can comprise the zirconium oxide and an ultraviolet polymer matrix, for example, comprising polyvinylidene fluoride, silicone (such as a silicone hardcoat), polyvinylfluoride, polypropylene, polyethylene, polyurethane, polyacrylate (such as polymethylmethacrylate and polymethacrylate), or a combination comprising at least one of the foregoing. A specific example of an ultraviolet blocking layer comprising multiple sub-layers is the combination of an acrylic primer (SHP401 or SHP470, available from Momentive Performance Materials, Waterford, NY; or SHP-9X, available from Exatec LLC, Wixom, MI) with a silicone hard-coat (AS4000 or AS4700, available from Momentive Performance Materials; or SHX, available from Exatec LLC).

In addition to the zirconium oxide, the ultraviolet blocking layer can comprise an ultraviolet blocking agent. The ultraviolet blocking agent can help to protect the underlying plastic panel and conductive mixture from degradation caused by exposure to the outdoor environment. Examples of ultraviolet blocking agents include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec), or combinations comprising at least one of the foregoing. The ultraviolet blocking agent can comprise a benzotriazole, a 2-hydroxyphenyltriazine, a benzoate, a hydroxybenzophenone, or a combination comprising at least one of the foregoing. The ultraviolet blocking agent can comprise 4,6-dibenzoyl resorcinol (DBR), hydroxyphenyltriazine, hydroxybenzophenones, hydroxylphenyl benzotriazoles, hydroxyphenyltriazines, polyaroylresorcinols, 2-(3-triethoxysilylpropyl)-4,6-dibenzoylresorcinol) (SDBR), a cyanoacrylate, or a combination comprising at least one of the foregoing. The ultraviolet blocking agent can comprise octabenzone. Examples of ultraviolet blocking agents are TINUVIN ™ 329, TINUVIN ™ 234, TINUVIN ™ 350, TINUVIN ™ 360 or UVINOL ™ 3030. The ultraviolet blocking agent can comprise a combination comprising at least one of the foregoing ultraviolet blocking agents. The ultraviolet blocking agent can be present in an amount of 0.001 to 10 wt%, or 5 to 9 wt%, or 0.1 to 0.5 wt%, or 0.15 to 0.4 wt%, based upon the total weight the infrared blocking layer.

The polymeric substrate is a multiwall polycarbonate substrate and can comprise a polycarbonate, such as a melt polymerized polycarbonate.

"Polycarbonate" as used herein means a polymer or copolymer having repeating structural carbonate units of formula (1) 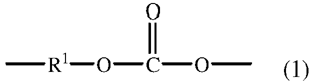 wherein at least 60% of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 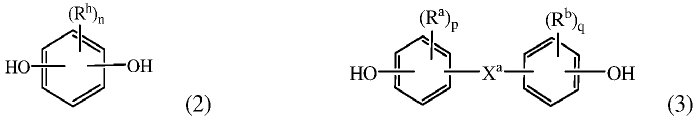 In formula (2), each R^{h} is independently a halogen atom, for example, bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an embodiment, p and q is each 0, or p and q is each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, - C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d})- wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Some illustrative examples of dihydroxy compounds that can be used are described, for example, in WO 2013/175448 A1, US 2014/0295363, and WO 2014/072923. Specific dihydroxy compounds include resorcinol, 2,2-bis(4-hydroxyphenyl) propane ("bisphenol A" or "BPA", in which each of A¹ and A² is p-phenylene and Y¹ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1 -one), 1,1 -bis(4-hydroxy-3-methylphenyl)cyclohexane, and 1,1-bis(4-hydroxy-3-methylphenyl)-3,3,5-trimethylcyclohexane (isophorone bisphenol).

The polymeric substrate can comprise a melt polycarbonate, for example, with a Fries level of less than or equal to 1,000 ppm by weight.

The polymeric substrate is a multiwall sheet. There is no particular limitation on the structure or geometry of the multiwall sheet. The multiwall sheet can comprise a plurality of layers. For example, the multiwall sheet can comprise 2 to 20 layers, or 5 to 10 layers. The individual layers of the multiwall sheet can comprise the same or different composition. The multiwall sheet can comprise a plurality of channels in one or more of the layers. The multiwall sheet can have a mass per unit area, measured in kilograms per square meter (kg/m²) of 0.5 to 8 kg/m², or 2 to 6 kg/m². The multiwall sheet can have a thickness of 2 to 50 mm, or 4 to 40 mm.

The multilayer structure can comprise a polymeric substrate and one or both of the infrared blocking layer and the ultraviolet blocking layer. The infrared blocking layer can be located on one or both of a first and second surface of the polymeric substrate. The ultraviolet blocking layer can be located on one or both of a first and second surface of the polymeric substrate. The infrared blocking layer or the ultraviolet blocking can be in direct contact with the polymeric substrate. The multilayer structure can comprise both the infrared blocking layer and the ultraviolet blocking layer. When the multilayer structure comprises both the infrared blocking layer and the ultraviolet blocking layer, the infrared blocking layer can be located in between the ultraviolet blocking layer and the polymeric substrate.

The multilayer structure can comprise a first polymeric substrate comprising a first blocking layer disposed on at least a first surface of the first polymeric substrate; a second polymeric substrate comprising a second blocking layer disposed on at least a second surface of the first polymeric substrate; and a gap located in between the first polymeric substrate and the second polymeric substrate, wherein the blocking layer comprises one or both of the infrared blocking layer and the ultraviolet blocking layer. The gap can comprise a gas (such as air or an inert gas), a vacuum, an aerogel, and the like.

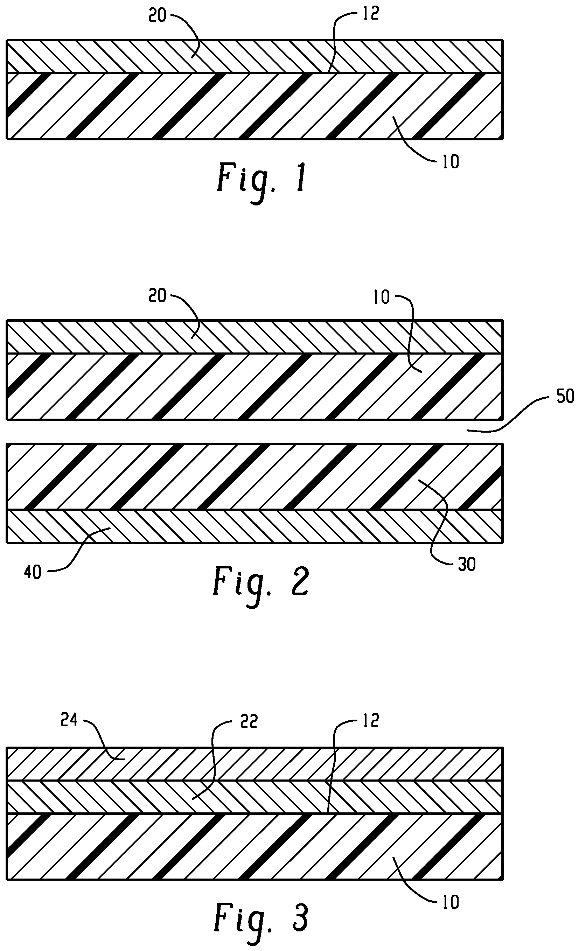

FIG. 1, FIG. 2, and FIG. 3 are illustrative examples of embodiments of the multilayer structure. FIG. 1 illustrates that the multilayer structure can comprise polymeric substrate 10 and blocking layer 20 and further illustrates that blocking layer 20 can be located on first surface 12 of polymeric substrate 10. Blocking layer 20 can be in direct contact with first surface 12 of polymeric substrate 10. Blocking layer 20 can comprise one or both of the infrared blocking layer and the ultraviolet blocking layer.

FIG. 2 illustrates that the multilayer structure can further comprise second polymeric substrate 30 and second blocking layer 40 having gap 50 located in between polymeric substrate 10 and second polymeric substrate 30. Blocking layer 20 can be in direct contact with first surface 12 of polymeric substrate 10 and second blocking layer 40 can be in direct contact with a surface of polymeric substrate 30.

FIG. 3 illustrates that the multilayer structure can comprise polymeric substrate 10, infrared blocking layer 22, and ultraviolet blocking layer 24. FIG. 3 illustrates that infrared blocking layer 22 can be located on first surface 12 of polymeric substrate 10 and in between polymeric substrate 10 and ultraviolet blocking layer 24. Infrared blocking layer 22 can be in direct contact with first surface 12 of polymeric substrate 10.

The multilayer structure can comprise an abrasion resistant layer disposed on at least one side of the polymeric substrate. The abrasion resistant layer can comprise one or both of an organic coating and an inorganic coating. The organic coating can comprise a urethane, an epoxide, an acrylate (such as a silicone-based acrylate), or a combination comprising at least one of the foregoing. The inorganic coating can comprise silicone, aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxy- nitride, silicon oxy-carbide, silicon carbide, tantalum oxide, titanium oxide, tin oxide, indium tin oxide, yttrium oxide, zinc oxide, zinc selenide, zinc sulfide, zirconium oxide, zirconium titanate, glass, or a combination comprising at least one of the foregoing.

The abrasion resistant layer can be applied by deposition from reactive species, such as those employed in vacuum-assisted deposition processes, and atmospheric coating processes, such as those used to apply sol-gel coatings to substrates. Examples of vacuum-assisted deposition processes include plasma enhanced chemical vapor deposition, ion assisted plasma deposition, magnetron sputtering, electron beam evaporation, and ion beam sputtering. The abrasion resistant layer can be applied by a vacuum deposition technique plasma-enhanced chemical vapor deposition (PECVD), expanding thermal plasma PECVD, plasma polymerization, photochemical vapor deposition, ion beam deposition, ion plating deposition, cathodic arc deposition, sputtering, evaporation, hollow-cathode activated deposition, magnetron activated deposition, activated reactive evaporation, thermal chemical vapor deposition, or a sol-gel coating process. Examples of atmospheric coating processes include curtain coating, spray coating, spin coating, dip coating, and flow coating, as well as combinations comprising at least one of the foregoing. The abrasion resistant layer can be applied via any technique or combination comprising at least one of the foregoing.

A specific type of PECVD process used to deposit the abrasion resistant layers comprising an expanding thermal plasma reactor is preferred. In an expanding thermal plasma PECVD process, a plasma is generated via applying a direct-current (DC) voltage to a cathode that arcs to a corresponding anode plate in an inert gas environment. The pressure near the cathode is typically higher than 20 kilopascal, e.g., close to atmospheric pressure, while the pressure near the anode resembles the process pressure established in the plasma treatment chamber of 2 to 14 pascal (Pa). The near atmospheric thermal plasma then supersonically expands into the plasma treatment chamber.

The reactive reagent for the expanding thermal plasma PECVD process can comprise, for example, octamethylcyclotetrasiloxane (D4), tetramethyldisiloxane (TMDSO), hexamethyldisiloxane (HMDSO), vinyl-D4, or another volatile organosilicon compound. The organosilicon compounds are oxidized, decomposed, and polymerized in the arc plasma deposition equipment, typically in the presence of oxygen and an inert carrier gas, such as argon, to form an abrasion resistant layer.

One or more of the layers in the multilayer substrate can comprise an additive to modify, for example, optical, chemical, and/or physical properties. Some possible additives include for example, mold release agents, ultraviolet blocking agents, flattening agents, binders, stabilizers (such as thermal stabilizers, and so forth), lubricants, plasticizers, rheology control additives, dyes, pigments, colorants, dispersants, anti-static agents, blowing agents, flame retardants, impact modifiers, antioxidants, among others, such as transparent fillers (e.g., silica, aluminum oxide, etc.). The above additives can be used alone or in combination with one or more additives.

The thermal stabilizer can comprise a phosphite, a phosphonite, a phosphine, a hindered amine, a hydroxyl amine, a phenol, an acryloyl modified phenol, a benzofuranone derivative, or the like, or a combination comprising at least one of the foregoing. Examples of thermal stabilizers are IRGAPHOS™168, DOVERPHOS™ S-9228, ULTRANOX™ 641.

The infrared blocking layer can be formed from an infrared blocking composition. The infrared blocking composition can comprise a curable prepolymer and the infrared blocking agent. The infrared blocking composition can comprise a curable prepolymer, the infrared blocking agent, and an infrared composition solvent.

The infrared blocking composition can comprise 60 to 95 wt%, or 75 to 95 wt%, or 70 to 88 wt%, or 62 to 75 wt% of a curable prepolymer based on a total weight of the curable prepolymer and an infrared blocking agent. The infrared blocking composition can comprise 2 to 40 wt%, or 5 to 35 wt%, or 12 to 30 wt%, or 15 to 28 wt% of the infrared blocking agent based on a total weight of the curable prepolymer and the infrared blocking agent.

The infrared blocking composition can be prepared by mixing a prepolymer solution comprising 30 to 95 wt% of the prepolymer based on a total weight of the prepolymer solution with an infrared blocking solution comprising 10 to 95 wt% of the infrared blocking agent based on the total weight of the infrared blocking solution. The infrared blocking composition can comprise 10 to 90 wt% of prepolymer solution and 10 to 90 wt% of the infrared blocking solution both based on the total weight of the infrared blocking composition.

The infrared composition solvent can comprise propylene glycol monoether, propylene glycol monomethyl ether, isopropyl alcohol, propylene glycol methyl ether acetate, and the like, or a combination comprising at least one of the foregoing.

The ultraviolet blocking layer can be formed from an ultraviolet blocking composition. The ultraviolet blocking composition can comprise a polymer matrix precursor (wherein the polymer matrix precursor is the precursor to the ultraviolet polymer matrix and can be a dissolved polymer or a prepolymer) and the zirconium oxide. The ultraviolet blocking composition can comprise a curable prepolymer (such as a heat curable prepolymer), the zirconium oxide, and an ultraviolet composition solvent.

The ultraviolet blocking composition can comprise 60 to 95 wt%, or 75 to 95 wt%, or 70 to 88 wt%, or 62 to 75 wt% of the polymer matrix precursor based on a total weight of the polymer matrix precursor and the zirconium oxide. The infrared blocking composition can comprise 5 to 40 wt%, or 5 to 35 wt%, or 12 to 30 wt%, or 15 to 28 wt% of the zirconium oxide based on a total weight of the polymer matrix precursor and the zirconium oxide. The ultraviolet blocking composition can comprise 3 to 50 wt%, or 5 to 30 wt%, or 5 to 20 wt% of the zirconium oxide based on a total weight of the composition.

The ultraviolet composition solvent can comprise a C₁₋₈ alcohol, 1-methoxy-2-propanol, 2-butoxyethanol, phenoxyethanol, 2-methoxyethanol, 2-ethoxyethanol, and the like, or a combination comprising at least one of the foregoing.

The multilayer structure can be formed by disposing one or both of the infrared blocking composition and the ultraviolet blocking composition on the polymeric substrate to form the layered structure. The multilayer structure can be formed by disposing one or both of the infrared blocking composition and the ultraviolet blocking composition on the polymeric substrate; and curing the infrared blocking composition to form the layered structure. The multilayer structure can be formed by disposing the ultraviolet blocking composition on the polymeric substrate to form the layered structure. The disposing can comprise coating (such as bar coating, laminating, or extruding). If a solvent is present, the method can comprise removing the solvent, for example, by drying optionally with heating.

The multilayer structure can be formed by disposing the infrared blocking composition on a removable substrate; and curing the infrared blocking composition to form the infrared blocking layer; removing the infrared blocking layer; and laminating the infrared blocking layer onto the polymeric substrate to form the layered structure.

The multilayer structure can be formed by extruding the infrared blocking composition and the polymeric substrate. The multilayer structure can be formed by extruding the ultraviolet blocking composition, the infrared blocking composition, and the polymeric substrate. The multilayer structure can be formed by extruding the infrared blocking composition and the polymeric substrate to form an infrared blocking layer on the polymeric substrate; and disposing the ultraviolet blocking composition on the infrared blocking layer, for example, by coating.

Following extrusion, the multilayer sheet can be laminated, for example, in a roll mill or a roll stack. The extruding can comprise extruding in a single or a twin screw extruder. The extruding can comprise adding the infrared blocking agent to the infrared polymer matrix (which can comprise the polymer or the prepolymer) as a masterbatch and extruding the infrared blocking composition to form an infrared blocking layer on the polymeric substrate.

The multilayer sheet can be formed by adhesively bonding two or more of the layers to one another.

An article can comprise the multilayer structure. The article can be a window. The window can be a vehicle window or a window in a building (such as an office building, a school, a store, a green house, a residential building, and the like). The article can be a lighting structure such as a headlamp, for example, for use in a vehicle. The vehicle can be a car, a truck, a boat, a train, a bus, an aircraft, and the like. The article can be a glazing.

The following examples are provided to illustrate the infrared blocking composition. The examples are merely illustrative and are not intended to limit devices made in accordance with the disclosure to the materials, conditions, or process parameters set forth therein.

### Examples

The direct solar reflectance (RDS), the direct solar transmittance (TDS), the secondary heat transfer factor (qi), the energy absorbance (Ae), the visible light transmission (Tvis), the visible light reflectance (Rvis), and the total solar transmission (Tts) were determined in accordance with ISO-9050. The IR blocking is equal to (the total IR transmittance (0.42456) minus the sum of the transmittance over the wavelengths of 780 to 2,500 nm) divided by the total IR transmittance times 100.

Haze was determined in accordance with ASTM D-1003-00, Procedure A, measured, e.g., using a HAZE-GUARD DUAL from BYK-Gardner, using and integrating sphere (0°/diffuse geometry), wherein the spectral sensitivity conforms to the CIE standard spectral value under standard lamp D65.

Color was determined in accordance with ASTM D1003-00, Procedure B using a Macbeth 7000A spectrometer, D65 illuminant, 10° observer, CIE (Commission Internationale de L'Eclairage) (1931), and SCI (specular component included), and UVEXC (i.e., the UV component is excluded).

### Examples 1-2: Effect of zirconium oxide in the ultraviolet blocking layer

Two ultraviolet blocking compositions were prepared using the amounts disclosed in Table 1 and were applied to 0.5 millimeter (mm) polycarbonate (PC) sheets. The polymer solution was a poly(methyl methacrylate) prepolymer solution comprising 45 wt% solid content. The ultraviolet blocking compositions were bar coated onto the polycarbonate sheet, heated for 30 minutes at 80 degrees Celsius (°C). The polycarbonate sheet had a haze of 0.1%, a visible light transmission of 90%, and a total solar transmission of 86%.

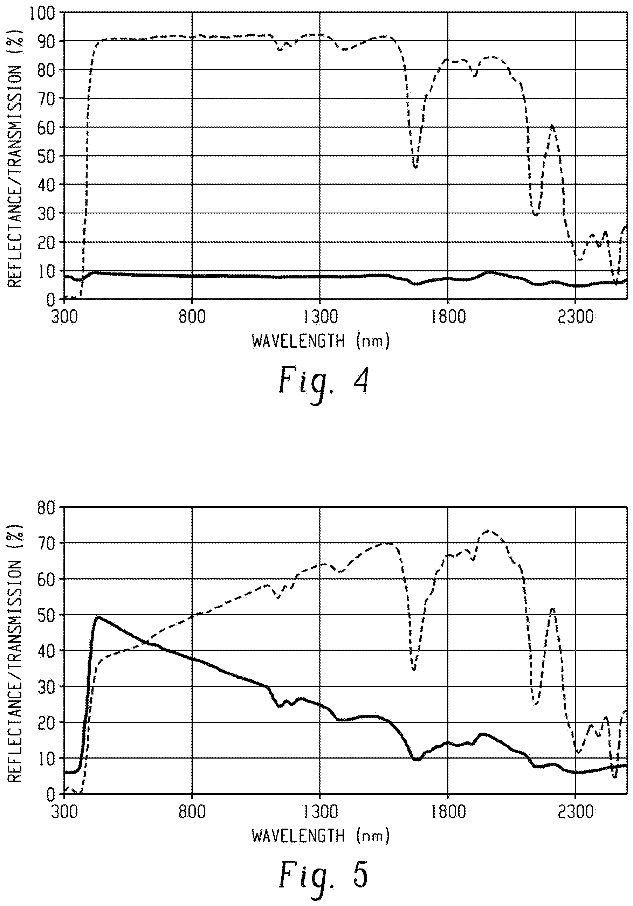

Visible-infrared spectroscopy data of the transmission and reflectance spectra were then measured for both of the coated PC sheets over the wavelengths of 300 to 2,500 nm. The spectra are shown in FIG. 4 and FIG. 5, respectively, for Examples 1 and 2, where the dotted line is the transmission data and the solid line is the reflection data.

| Table 1 | | |
|---|---|---|
| Example | 1 | 2 |
| PMMA (wt%) | 10-15 | 10-15 |
| 1-methoxy-2-propanol (wt%) | 75-85 | 75-85 |
| Octabenzone (wt%) | 5-7 | 5-7 |
| Zr02 (wt%) | 0 | 8-17 |

A comparison of FIG. 4 and FIG. 5 illustrate that the presence of the zirconium dioxide results in an increase in the reflectance over all wavelengths and a decrease in the transmittance.

### Examples 3-8: Effect of tungsten oxide in the infrared blocking layer

Three multilayer structures were prepared by co-extruding an infrared blocking composition to form a coextruded layer having a total thickness of 0.5 mm with an infrared blocking layer having a thickness of 0.05 mm. The co-extrusion was performed using two single screw extruders for the infrared blocking layer and the polycarbonate substrate. The extruders had a barrel temperature of 300°C and a die head temperature of 280°C. The screw speed for the infrared blocking composition and the polycarbonate was 20 rpm and 80 rpm, respectively, to form a multiwall polycarbonate substrate having a thickness of 0.45 mm The formulations of the infrared blocking compositions for Examples 3-8 are shown in Table 2, where CTO is the cesium tungsten oxide, the ADK stabilizer is LA-31RG, and PETS is pentaerythritol tetrastearate.

| Table 2 | | | | | | |
|---|---|---|---|---|---|---|
| Example | 3 | 4 | 5 | 6 | 7 | 8 |
| Polycarbonate (wt%) | 58.665 | 58.665 | 70.003 | 75.672 | 58.665 | 58.665 |
| CTO (wt%) | 34.014 | 34.014 | 22.676 | 17.007 | 34.014 | 34.014 |
| ADK stabilizer (wt%) | 6.858 | 6.858 | 6.858 | 6.858 | 6.858 | 6.858 |
| PETS (wt%) | 0.371 | 0.371 | 0.371 | 0.371 | 0.371 | 0.371 |
| Phosphite stabilizer (wt%) | 0.093 | 0.093 | 0.093 | 0.093 | 0.093 | 0.093 |
| Solvent violet 36 (wt%) | - | 0.012 | 0.008 | 0.006 | 0.05 | 0.1 |
| Copper Phthalocyanine Pigment Blue 15:4 (wt%) | - | 0.016 | 0.011 | 0.008 | - | - |
| Carbon black (wt%) | - | 0.060 | 0.040 | 0.030 | - | - |
| Infrared blocking layer thickness (mm) | 0.05 | 0.05 | 0.07 | 0.08 | 0.05 | 0.05 |

The multilayer structure of Examples 4-8 were then tested for direct solar transmittance, direct solar reflectance, energy absorbance, secondary heat transfer factor, total solar transmission, visible light transmission, visible light reflectance, IR blocking, and haze. The results are shown in Table 3.

| Table 3 | | | | | | |
|---|---|---|---|---|---|---|
| Example | 3 | 4 | 5 | 6 | 7 | 8 |
| Infrared blocking layer thickness (mm) | 0.05 | 0.05 | 0.07 | 0.08 | 0.05 | 0.05 |
| Direct solar transmittance (%) | - | 22.53 | 31.36 | 34.26 | 30.66 | 28.95 |
| Direct solar reflectance (%) | - | 6.01 | 6.07 | 5.90 | 6.54 | 6.39 |
| Secondary heat transfer factor (%) | - | 18.44 | 16.15 | 15.44 | 16.21 | 16.69 |
| IR blocking (%) | - | 91 | 81 | 79 | 87 | 87 |
| Energy absorbance (%) | - | 71.46 | 62.57 | 59.84 | 62.80 | 64.67 |
| Visible light transmission (%) | - | 42.60 | 50.64 | 55.02 | 56.33 | 49.81 |
| Visible light reflectance (%) | - | 6.95 | 6.94 | 6.81 | 7.83 | 7.33 |
| Total solar transmission (%) | - | 40.97 | 47.51 | 49.70 | 46.86 | 45.64 |
| Haze (%) | - | 7.0 | 7.6 | 7.5 | 7.1 | 6.9 |

### Example 9: Effect of the infrared blocking layer on the solar control capability

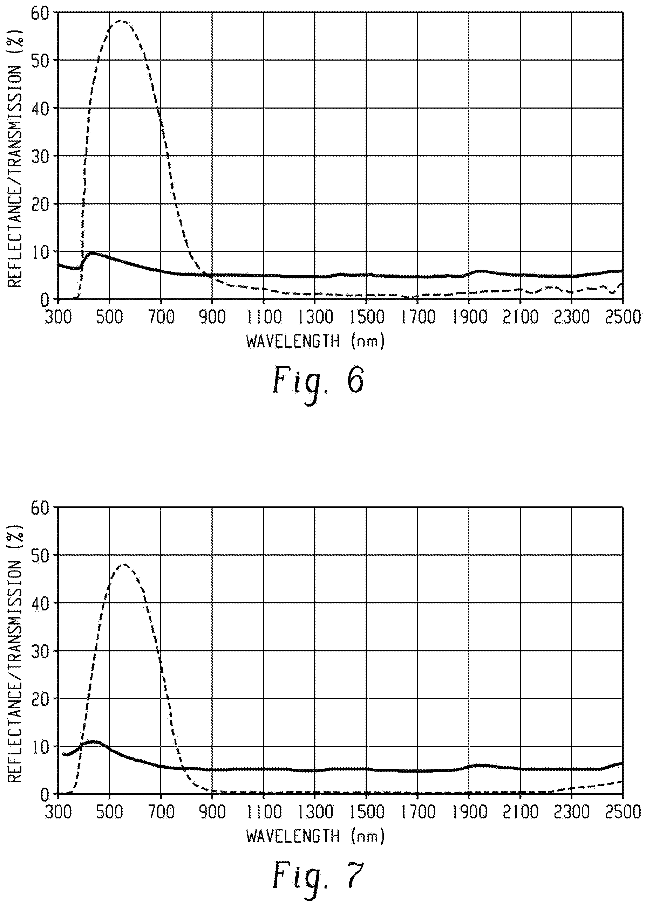

A multilayer structure was prepared in accordance with the procedure of Example 3 except that the color composition of solvent violet 36, copper phthalocyanine pigment blue, and carbon black was not added. Transmission (dotted line) and the reflection (solid line) spectroscopy data over the visible IR range were measured for the infrared blocking layer of Example 8 and the results are shown in FIG. 6.

FIG. 6 shows the improved solar control capability of the multilayer structure comprising the infrared blocking layer.

### Example 10: Effect of CTO on the solar control capability

A 2 mm thick multilayer structure was prepared in accordance with the procedure of Example 4 except that the CTO was not present.

| Table 4 | |
|---|---|
| Example | 10 |
| Infrared blocking layer thickness (mm) | 2 |
| Direct solar transmittance (%) | 79.31 |
| Direct solar reflectance (%) | 9.20 |
| Secondary heat transfer factor (%) | 2.97 |
| IR blocking (%) | 12.3 |
| Energy absorbance (%) | 11.50 |
| Visible light transmission (%) | 88.2 |
| Visible light reflectance (%) | 10.1 |
| Total solar transmission (%) | 82.3 |
| Haze (%) | 1.2 |

Table 4 clearly shows the effect of the CTO on the multilayer structure. For example, Table 4 shows that the multilayer structure without the CTO has an increased direct solar transmittance, an increased direct solar reflectance, a decreased secondary heat transfer factor, and a decreased IR blocking.

### Examples 11-13: Effect of blocking layer thickness

Three multilayer structures were prepared using a co-extrusion process. The co-extrusion was performed using a single barrel extruder having a barrel temperature of 290°C and a die head temperature of 270°C. The screw speed for the infrared blocking composition and the polycarbonate was 20 rpm and 80 rpm, respectively. The multiwall polycarbonate substrate had a thickness of 16 mm.

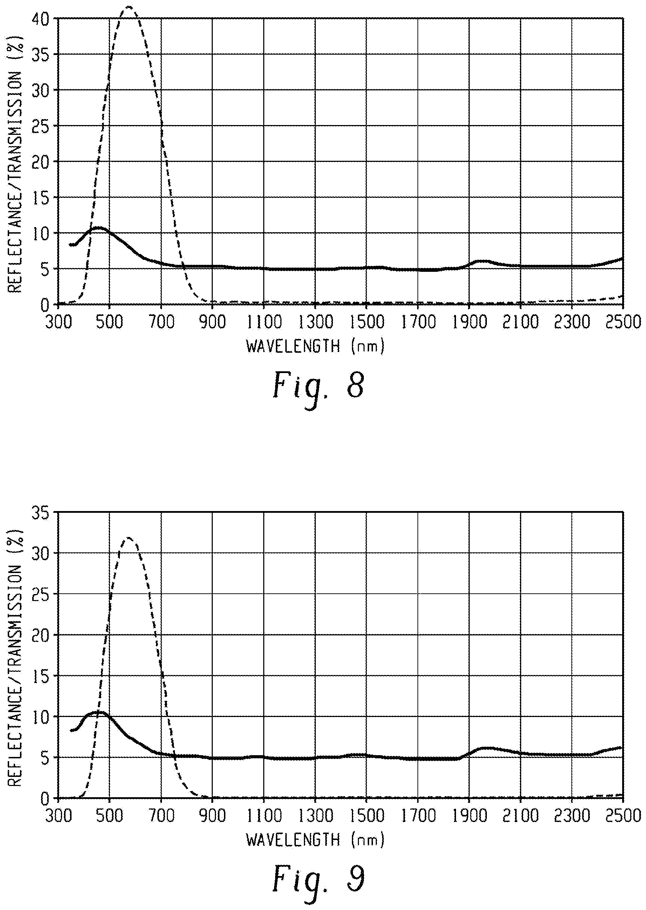

The multilayer structures were then tested for direct solar transmittance, direct solar reflectance, energy absorbance, secondary heat transfer factor, total solar transmission, visible light transmission, visible light reflectance, IR blocking, and haze. The results are shown in Table 4. Transmission (dotted line) and reflection (solid line) spectroscopy data over the visible and range were measured for the multilayer structures of Examples 11-13 and the results are shown in FIG. 7-9, respectively.

| Table 5 | | | |
|---|---|---|---|
| Example | 11 | 12 | 13 |
| Infrared blocking layer thickness (mm) | 0.04 | 0.05 | 0.07 |
| Direct solar transmittance (%) | 19.26 | 15.59 | 10.8 |
| Direct solar reflectance (%) | 6.54 | 6.42 | 6.3 |
| Secondary heat transfer factor (%) | 19.15 | 20.13 | 21.39 |
| IR blocking (%) | 99 | 100 | 100 |
| Energy absorbance (%) | 74.2 | 77.99 | 82.9 |
| Visible light transmission (%) | 45.79 | 38.88 | 29.04 |
| Visible light reflectance (%) | 7.57 | 7.28 | 6.94 |
| Total solar transmission (%) | 38.41 | 35.72 | 32.19 |
| Haze (%) | 5.9 | 7.3 | 9.2 |

Table 5 shows that the direct solar transmittance, direct solar reflectance, the visible light transmission, the visible light reflectance, and the total solar transmission decrease with increasing thickness; and the energy absorbance, the secondary heat transfer factor, and haze increase with increasing thickness.

FIG. 7-9 show that the maximum transmittance over 300 to 700 nm decreases with increasing thickness of the infrared blocking layer.

The terms "a" and "an" do not denote a limitation of quantity, but rather denote the presence of at least one of the referenced item. The term "or" means "and/or" unless clearly indicated otherwise by context. Reference throughout the specification to "an embodiment", "another embodiment", "some embodiments", and so forth, means that a particular element (e.g., feature, structure, step, or characteristic) described in connection with the embodiment is included in at least one embodiment described herein, and may or may not be present in other embodiments. In addition, it is to be understood that the described elements may be combined in any suitable manner in the various embodiments. "Optional" or "optionally" means that the subsequently described event or circumstance may or may not occur, and that the description includes instances where the event occurs and instances where it does not. The terms "first," "second," and the like, "primary," "secondary," and the like, as used herein do not denote any order, quantity, or importance, but rather are used to distinguish one element from another. The terms "front", "back", "bottom", and/or "top" are used herein, unless otherwise noted, merely for convenience of description, and are not limited to any one position or spatial orientation. The term "combination" is inclusive of blends, mixtures, alloys, reaction products, and the like. The endpoints of all ranges directed to the same component or property are inclusive of the endpoints, are independently combinable, and include all intermediate points, for example, ranges of "up to 25 wt%, or 5 to 20 wt%" are inclusive of the endpoints and all intermediate values of the ranges of "5 to 25 wt%," such as 10 to 23 wt%, etc.

In general, the compositions, methods, and articles can alternatively comprise, consist of, or consist essentially of, any ingredients, steps, or components herein disclosed. The compositions, methods, and articles can additionally, or alternatively, be formulated, conducted, or manufactured so as to be devoid, or substantially free, of any ingredients, steps, or components not necessary to the achievement of the function or objectives of the present claims.

Unless specified to the contrary herein, all test standards are the most recent standard in effect as of the filing date of this application, or, if priority is claimed, the filing date of the earliest priority application in which the test standard appears. Unless defined otherwise, technical and scientific terms used herein have the same meaning as is commonly understood by one of skill in the art to which this disclosure belongs.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A multilayer structure comprising:
a multiwall polycarbonate substrate having a first surface; and
a protective layer comprising one or both of an ultraviolet blocking layer and an infrared blocking layer located on the first surface;
wherein the ultraviolet blocking layer comprises zirconium oxide and an ultraviolet layer polymer matrix; and
wherein the infrared blocking layer comprises
50 to 98 wt% of an infrared layer polymer matrix based on a total weight of the infrared blocking layer; and
2 to 50 wt% of an infrared blocking agent based on the total weight of the infrared blocking layer; wherein the infrared blocking agent comprises tungsten oxide.

2. The multilayer structure of Claim 1, wherein the protective layer comprises the ultraviolet blocking layer.

3. The multilayer structure of any one of the preceding claims, wherein the protective layer comprises the infrared blocking layer.

4. The multilayer structure of any one of the preceding claims, wherein the infrared blocking layer is present; and wherein the infrared blocking agent further comprises indium tin oxide, antimony tin oxide, fluorine tin oxide, or a combination comprising at least one of the foregoing.

5. The multilayer structure of any one of the preceding claims, wherein the protective layer comprises the infrared blocking layer; and wherein the infrared blocking agent comprises the tungsten oxide; and wherein the tungsten oxide comprises potassium tungsten oxide (K(WO₃)₃), rubidium tungsten oxide (Rb(WO₃)₃), cesium tungsten oxide (Cs(WO₃)₃), thallium tungsten oxide (TI(WO₃)₃), or a combination comprising one or more of the foregoing, preferably, the tungsten oxide comprises cesium tungsten oxide.

6. The multilayer structure of any one of the foregoing claims, wherein the protective layer comprises an ultraviolet blocking agent comprising a benzotriazole, a 2-hydroxyphenyltriazine, a benzoate, a hydroxybenzophenone, octabenzone, or a combination comprising at least one of the foregoing located in one or both of the ultraviolet blocking layer and the infrared blocking layer.

7. The multilayer structure of any one of the foregoing claims, wherein the protective layer comprises the infrared blocking layer; and wherein the infrared layer polymer matrix comprises a polycarbonate, a polysiloxane, a polyurethane, a polyacrylate, or a combination comprising one or more of the foregoing.

8. The multilayer structure of any one of the foregoing claims, wherein the protective layer comprises the infrared blocking layer; and wherein the infrared blocking layer has a thickness of 1 micrometer to 10 mm.

9. The multilayer structure of any one of the preceding claims, wherein the protective layer comprises the ultraviolet blocking layer; and wherein the ultraviolet layer polymer matrix comprises poly(methyl methacrylate).

10. The multilayer structure of any one of the preceding claims, wherein the multilayered structure further comprises
a second multiwall polycarbonate substrate comprising a second protective layer disposed on at least a second surface of the second multiwall polycarbonate substrate; and
a gap located in between the multiwall polycarbonate substrate and the second multiwall polycarbonate substrate.

11. The multilayer structure of any one of the preceding claims, further comprising an abrasion resistant layer located on a surface opposite the multiwall polymeric substrate.

12. The multilayer structure of any one of the preceding claims, wherein the protective layer comprises both the ultraviolet blocking layer and the infrared blocking layer; and wherein the infrared blocking layer is located in between the ultraviolet blocking and the multiwall polycarbonate substrate.

13. An article comprising the multilayer structure of any one of the preceding claims.

14. The article of Claim 13, wherein the article is a window.

15. A method of forming the multilayer structure of any one of Claims 1-14 comprising:
laminating or coextruding the protective layer and the multiwall polycarbonate substrate to form the multilayer structure; or
coating a curable composition on the multiwall polycarbonate substrate and curing the protective layer; or
co-extruding the infrared blocking layer and the multiwall polycarbonate substrate and coating the ultraviolet blocking layer on the infrared blocking layer.

## Patentansprüche

1. Eine mehrschichtige Struktur umfassend:
ein mehrwandiges Polycarbonatsubstrat mit einer ersten Oberfläche, und eine Schutzschicht umfassend eine UV-undurchlässige Schicht, eine Infrarot-undurchlässige Schicht, oder beide, die sich auf der ersten Oberfläche befindet/befinden,
wobei die UV-undurchlässige Schicht Zirconiumoxid und eine Ultraviolettschichtpolymermatrix umfasst, und
wobei die Infrarot-undurchlässige Schicht
50 bis 98 Gew.-% einer Infrarotschichtpolymermatrix, basierend auf dem Gesamtgewicht der Infrarot-undurchlässigen Schicht, und
2 bis 50 Gew.-% eines Infrarot-undurchlässigen Agens, basierend auf dem Gesamtgewicht der Infrarot-undurchlässigen Schicht, umfasst,
wobei das Infrarot-undurchlässige Agens Wolframoxid umfasst.

2. Die mehrschichtige Struktur gemäß Anspruch 1, wobei die Schutzschicht eine Ultraviolett-undurchlässige Schicht umfasst.

3. Die mehrschichtige Struktur gemäß einem der vorherigen Ansprüche, wobei die Schutzschicht die Infrarot-undurchlässige Schicht umfasst.

4. Die mehrschichtige Struktur gemäß einem der vorherigen Ansprüche, wobei die Infrarot-undurchlässige Schicht vorhanden ist, und wobei das Infrarot-undurchlässige Agens zusätzlich Indium-Zinn-Oxid, Antimon-Zinn-Oxid, Fluor-Zinn-Oxid oder eine Kombination, umfassend mindestens einer der vorherigen Agenzien, umfasst.

5. Die mehrschichtige Struktur gemäß einem der vorherigen Ansprüche, wobei die Schutzschicht die Infrarot-undurchlässige Schicht umfasst, und wobei das Infrarot-undurchlässige Agens Wolframoxid umfasst, und wobei das Wolframoxid Kalium-Wolfram-Oxid (K(WO₃)₃), Rubidium-Wolfram-Oxid (Rb(WO₃)₃), Cäsium-Wolfram-Oxid (Cs(WO₃)₃, Thallium-Wolfram-Oxid (TI(WO₃)₃), oder eine Kombination, umfassend eines oder mehrere der vorherigen Agenzien, umfasst, vorzugsweise umfasst das Wolframoxid Cäsium-Wolfram-Oxid.

6. Die mehrschichtige Struktur gemäß einem der vorherigen Ansprüche, wobei die Schutzschicht ein Ultraviolett-undurchlässiges Agens, umfassend ein Benzotriazol, ein 2-Hydrophenyltriazin, ein Benzoat, ein Hydrobenzophenon, Octabenzon oder eine Kombination, umfassend wenigstens eines der vorherigen Agenzien, umfasst, die sich in der Ultraviolett-undurchlässigen Schicht, der Infrarot-undurchlässigen Schicht, oder in beiden, befindet.

7. Die mehrschichtige Struktur gemäß einem der vorherigen Ansprüche, wobei die Schutzschicht die Infrarot-undurchlässige Schicht umfasst, und wobei die Infrarotschichtpolymermatrix ein Polycarbonat, ein Polysiloxan, ein Polyurethan, ein Polyacrylat oder eine Kombination, umfassend eines oder mehrere der vorherigen Agenzien, umfasst.

8. Die mehrschichtige Struktur gemäß einem der vorherigen Ansprüche, wobei die Schutzschicht die Infrarot-undurchlässige Schicht umfasst, und wobei die Infrarot-undurchlässige Schicht eine Dicke von 1 µm bis 10 mm aufweist.

9. Die mehrschichtige Struktur gemäß einem der vorherigen Ansprüche, wobei die Schutzschicht die Ultraviolett-undurchlässige Schicht umfasst, und wobei die Ultraviolettschichtpolymermatrix Poly(methylmethacrylat) umfasst.

10. Die mehrschichtige Struktur gemäß einem der vorherigen Ansprüche, wobei die mehrschichtige Struktur zusätzlich ein zweites mehrwandiges Polycarbonatsubstrat mit einer zweiten Schutzschicht, die auf wenigstens einer zweiten Oberfläche des zweiten mehrwandigen Polycarbonatsubstrats aufgebracht ist, und einen Spalt, der sich zwischen dem mehrwandigen Polycarbonatsubstrat und dem zweiten mehrwandigen Polycarbonatsubstrat befindet, umfasst.

11. Die mehrschichtige Struktur gemäß einem der vorherigen Ansprüche, zusätzlich umfassend eine abriebresistente Schicht, die sich auf einer dem mehrwandigen Polycarbonatsubstrat gegenüberliegenden Oberfläche befindet.

12. Die mehrschichtige Struktur gemäß einem der vorherigen Ansprüche, wobei die Schutzschicht sowohl die Ultraviolett-undurchlässige Schicht, als auch die Infrarot-undurchlässige Schicht umfasst, und wobei die Infrarot-undurchlässige Schicht sich zwischen der Ultraviolett-undurchlässigen Schicht und dem mehrwandigen Polycarbonatsubstrat befindet.

13. Ein Gegenstand umfassend die mehrschichtige Struktur gemäß einem der vorherigen Ansprüche.

14. Der Gegenstand gemäß Anspruch 13, wobei der Gegenstand ein Fenster ist.

15. Ein Verfahren zum Ausbilden der mehrschichtigen Struktur gemäß einem der Ansprüche 1-14 umfassend:
Laminieren oder Co-Extrudieren der Schutzschicht und des mehrwandigen Polycarbonatsubstrats, um die mehrschichtige Struktur auszubilden, oder Beschichten des mehrwandigen Polycarbonatsubstrats mit einer härtbaren Zusammensetzung und das Aushärten der Schutzschicht, oder
Co-Extrudieren der Infrarot-undurchlässigen Schicht und des mehrwandigen Polycarbonatsubstrats und das Beschichten der Infrarot-undurchlässigen Schicht mit der Ultraviolett-undurchlässigen Schicht.

## Revendications

1. Structure multicouche comprenant :
un substrat en polycarbonate multi-parois ayant une première surface ; et
une couche protectrice comprenant une couche de blocage des ultraviolets ou une couche de blocage des infrarouges, ou les deux, située sur la première surface ;
la couche de blocage des ultraviolets comprenant de l'oxyde de zirconium et une matrice polymère de la couche ultraviolet ; et
la couche de blocage des infrarouges comprenant
50 à 98 % en poids d'une matrice polymère de la couche infrarouge, rapportés au poids total de la couche de blocage des infrarouges ; et
2 à 50 % en poids d'un agent de blocage des infrarouges, rapportés poids total de la couche de blocage des infrarouges ; l'agent de blocage des infrarouges comprenant de l'oxyde de tungstène.

2. Structure multicouche selon la revendication 1, dans laquelle la couche de protection comprend la couche de blocage des ultraviolets.

3. Structure multicouche selon l'une quelconque des revendications précédentes, dans laquelle la couche protectrice contient la couche de blocage des infrarouges.

4. Structure multicouche selon l'une quelconque des revendications précédentes, dans laquelle la couche de blocage des infrarouges est présente ; et dans laquelle l'agent de blocage des infrarouges comprend en outre de l'oxyde d'indium-étain, de l'oxyde d'antimoine-étain, de l'oxyde d'étain dopé au fluor, ou une combinaison comprenant au moins l'un des éléments précités.

5. Structure multicouche selon l'une quelconque des revendications précédentes, dans laquelle la couche de protection comprend la couche de blocage des infrarouges ; et dans laquelle l'agent de blocage des infrarouges comprend de l'oxyde de tungstène ; et dans laquelle l'oxyde de tungstène contient de l'oxyde de tungstène de potassium (K(WO₃)₃), de l'oxyde de tungstène de rubidium (Rb(WO₃)₃), de l'oxyde de tungstène de césium (Cs(WO₃)₃), de l'oxyde de tungstène de thallium (TI(WO₃)₃), ou une combinaison contenant un ou plusieurs des éléments précités, de préférence, l'oxyde de tungstène contient de l'oxyde de tungstate de césium.

6. Structure multicouche selon l'une quelconque des revendications précédentes, dans laquelle la couche protectrice comprend un agent de blocage des ultraviolets contenant un benzotriazole, une 2-hydroxyphényltriazine, un benzoate, une hydroxybenzophénone, une octabenzone, ou une combinaison contenant au moins l'un des éléments précités, situé dans la couche de blocage des ultraviolets ou dans la couche de blocage des infrarouges ou dans les deux.

7. Structure multicouche selon l'une quelconque des revendications précédentes, dans laquelle la couche de protection comprend la couche de blocage des infrarouges ; et dans laquelle la matrice polymère de la couche infrarouge comprend un polycarbonate, un polysiloxane, un polyuréthane, un polyacrylate, ou une combinaison comprenant un ou plusieurs des éléments précités.

8. Structure multicouche selon l'une quelconque des revendications précédentes, dans laquelle la couche protectrice comprend la couche de blocage des infrarouges ; et dans laquelle la couche de blocage des infrarouges a une épaisseur comprise entre 1 micromètre et 10 mm.

9. Structure multicouche selon l'une quelconque des revendications précédentes, dans laquelle la couche protectrice contient la couche de blocage des ultraviolets ; et dans laquelle matrice polymère de la couche ultraviolet contient du poly(méthacrylate de méthyle).

10. Structure multicouche selon l'une quelconque des revendications précédentes, dans laquelle la structure multicouche comprend en outre
un second substrat en polycarbonate multi-parois comprenant une seconde couche protectrice disposée sur au moins une seconde surface du second substrat en polycarbonate multi-parois ; et
un espace situé entre le substrat en polycarbonate multi-parois et le second substrat en polycarbonate multi-parois.

11. Structure multicouche selon l'une quelconque des revendications précédentes, comprenant en outre une couche résistante à l'abrasion située sur une surface opposée au substrat en polymère multi-parois.

12. Structure multicouche selon l'une quelconque des revendications précédentes, dans laquelle la couche de protection comprend à la fois la couche de blocage des ultraviolets et la couche de blocage des infrarouges ; et dans laquelle la couche de blocage des infrarouges est située entre la couche de blocage des ultraviolets et le substrat en polycarbonate multi-parois

13. Article comprenant la structure multicouche selon l'une quelconque des revendications précédentes.

14. Article selon la revendication 13, dans lequel l'article est une fenêtre.

15. Procédé pour former la structure multicouche selon l'une quelconque des revendications 1 à 14, comprenant les étapes consistant à :
Laminer ou coextruder la couche protectrice et le substrat en polycarbonate à multi-parois pour former la structure multicouche ; ou
Appliquer une composition durcissable sur le substrat en polycarbonate à multi-parois et durcir la couche protectrice ; ou
Coextruder la couche de blocage des infrarouges et du substrat en polycarbonate à multi-parois et appliquer la couche de blocage des ultraviolets sur la couche de blocage des infrarouges.
